# EUROPEAN PATENT SPECIFICATION

(11) **EP 1 843 888 B1**
(45) Date of publication and mention of the grant of the patent: **19.10.2011**
(21) Application number: 05785664.3
(22) Date of filing: 22.08.2005
(51) Int. Cl.: B29C 47/76

(54) **BARREL PROCESSOR HAVING DEGASSING MEANS**
ZYLINDERBEHANDLUNGSVORRICHTUNG MIT ENTGASUNGSMITTEL
PROCESSEUR CYLINDRIQUE OU EXTRUDEUSE PRÉSENTANT UN MOYEN DE DÉGAZAGE

(30) Priority: 30.08.2004 EP 04020526
(43) Date of publication of application: 17.10.2007
(73) Proprietor: Plastik Textile S.p.a., 24061 Albano S. Alessandro (Bergamo) (IT)
(72) Inventor: CATTANEO, Gianangelo, I-Scanzorosciate (IT); PONZIELLI, Guiseppe, I-21033 Cittiglio (IT)
(74) Representative: Ritscher, Thomas
(86) International application number: PCT/EP2005/009054
(87) International publication number: WO 2006/024418

(56) References cited:
- US-A- 3 078 512
- US-A- 3 535 737
- US-A- 4 120 050
- PATENT ABSTRACTS OF JAPAN vol. 2003, no. 12, 5 December 2003 (2003-12-05) & JP 2004 066721 A (JAPAN STEEL WORKS LTD:THE), 4 March 2004 (2004-03-04)
- PATENT ABSTRACTS OF JAPAN vol. 1996, no. 09, 30 September 1996 (1996-09-30) & JP 08 120283 A (NIPPON STEEL CORP), 14 May 1996 (1996-05-14)
- PATENT ABSTRACTS OF JAPAN vol. 2000, no. 02, 29 February 2000 (2000-02-29) & JP 11 300811 A (JAPAN STEEL WORKS LTD:THE), 2 November 1999 (1999-11-02)
- PATENT ABSTRACTS OF JAPAN vol. 008, no. 012 (M-269), 19 January 1984 (1984-01-19) & JP 58 175641 A (MITSUBISHI JUKOGYO KK), 14 October 1983 (1983-10-14)

## Description

The present invention generally relates to a barrel processor of the type which is suited for processing of molten polymer compositions and includes at least one degassing means, i. e. a device or "port" for removing steam or other gaseous components that accumulate within the barrel processor and are generated by the processed material upon heating, e.g. when processing a thermoplastic polymer composition which may include additives, fillers and other components conventionally used in polymer compositions for extrusion, molding, coating, and other processing methods.

Generally, degassing or "venting" techniques in the processing of polymer compositions rely on the exposure of a melt to a pressure which is lower than ambient or atmospheric pressure (i.e. absolute pressures ranging between zero and any pressure below ambient). The need for degassing a viscous fluid, e.g. a polymer melt, may be due to residues of humidity or low boiling fractions, e.g. oligomers in the processed material, and the fact that such gasses should be eliminated, either to avoid polymer degradation or simply to optimize the extrudate quality.

It is known in the art that the efficiency of the degassing method depends on several parameters, such as diffusion rates, the extent of the gas/melt interface, the pressure differential, thickness of the melt, etc..

Conventionally, barrel processors designed for degassing include at least one degassing means or port, generally an opening for connecting the cavity of the processor with a source of reduced pressure, e.g. a pump or other suction device for removing gaseous components that are formed in the cavity, e.g. water vapor or gaseous decomposition products generated from the processed material or its components. Examples of advanced prior art ports suitable, inter alia, for degassing are disclosed in EP 0 907 492 and EP 1 419 041. More conventional devices are those of the type disclosed, for example, in US 4 722 680.

Typically, degassing or venting (these terms being used interchangeably herein) of a barrel processor is achieved along a melt conveying section but in a melt-sealed zone where the filling factor of the screw channel Φ has been designed such as to be smaller than unity when in operation. When the filling factor Φ is equal to unity, the screw channel is completely filled with molten material, and no significant degassing could be achieved there in lack of a significant interface between the melt and gas. In fact, when the filling factor approaches unity the interfacial area melt-gas approaches zero. Moreover, in this latter case melt would intrude into any venting aperture in the wall of the barrel and cause clogging of the aperture.

However, even if the venting section has been designed so as to guarantee a filling factor Φ << 1 throughout operation, it may happen that some molten material remains at or near the venting aperture and obstructs or prevents degassing, notably when it has a chance to accumulate. The factor Φ is defined herein as a factor dependent on the ratio of melt volume to the screw free volume in a given screw location, where the screw free volume is the barrel cavity volume less the screw volume, and the melt volume is the volume occupied by the melt within the screw free volume. When the melt volume equals the screw free volume, then Φ=1; when the melt volume is less than the screw free volume, then Φ<1.

For example, assuming that the free volume of a given screw over two turns (one turn corresponds to the helical path required to pass from the beginning of one pitch to the beginning to the subsequent pitch down the screw channel) is 100 cm³ and the melt volume is 100 cm³ too: In this case and in line with the above definition, the screw channel is "full" and Φ=1. However, if the free volume is 100 cm³ and the melt volume is only 25 cm³, then Φ=0.25 and the screw channel is relatively empty.

The problems with cleaning the venting port (even if Φ<<1) are due to a drag flow mechanism which becomes temporarily "blinded" during the short interval when melt passes in front of the venting aperture, and even more recent proposals, e.g. as disclosed in US 6 302 572 or EP 822 055, have not fully resolved this problem in that even a small melt deposit may become a problem for the quality of the extrudate because melt particles tend to become degraded after a certain time as a consequence of extended exposure to processing temperatures, and some drops of the melt may re-enter the extrusion melt stream if carried away, e.g. by a flank of the screw flight flank when passing in front of the venting port. Both of these effects may act in combination, and result in severe contamination of the melt and decreasing extrudate quality to the point of product rejection. Further, after a certain processing time even a very low rate of accumulation may eventually clog and block the venting aperture and cause an avalanching contamination effect or machine down-time for cleaning.

The disadvantages of these effects have been recognized in the art but all previous attempts to avoid them (e.g. US 4,722,680) have not been sufficiently effective. Further, attempts to resolve the problem by a "ram" or piston- type device, - i.e. for reciprocating motion along an axis that intersects with the longitudinal axis of the screw and having a front face shaped in conformity with the inner wall of the elongated cavity , e.g. as disclosed in US 3 078 512 as far back as 1960 - have not become generally accepted in the art and have not resolved the problem when in commercial operation even though seemingly providing a fail-safe solution.

With this type of device, the front face of the piston forms part of the inner wall of.the cavity as long as the piston is in the first position while providing an opening of the inner wall when the piston is in the second position for connecting the opening of the processor's wall by a passage with a source of reduced pressure. In other words, the front face of the piston can be contacted by the screw when in its first position so that a deposit formed on the piston's front face is removed upon rotation of the screw.

It has been observed, however, that in actual practice deposits may still remain on the front face of the piston to the extent that the venting duct that is connected with a source of reduced pressure may become clogged with polymer material.

Accordingly, it is a general object of the invention to provide for a barrel processor which does not only provide for complete avoidance of clogging or residue formation art or near the venting aperture but which additionally does so by means of a most simple design.

This object is achieved according to the invention by means of a processor as defined in claim 1.

According to a second embodiment, the present invention provides for a method of degassing a molten polymer composition contained in a barrel processor as defined in claim 5.

Typically, the piston includes a preferably cylindrical piston for back-and-forth movement within a piston-receiving chamber and a drive for causing alternating motion of the piston between a first, or closing, and the second, or venting, position.

The front face of the piston is shaped so as to form an essentially continuous and smooth portion of the inner wall of the cavity without any significant interruption, i.e. be essentially "chink free" when in the first or closing position.. This implies both the best possible fit of the piston within the cylinder, in the area of the front face, at least, as well as preclusion of any rotation of the piston around its axis of motion. Preferably, the movement of the piston is controlled so that the piston alternates at a frequency of typically between, about 10 and 100 cycles per minute. A piston cycle is the period of time that passes between a back-and-forth movement of the piston.

According to a preferred embodiment, the piston is provided with a device, such as a "loading cell" or pressure sensor for signaling a pressure exerted by molten polymer composition on the piston's front face when in the first or closing position. Conventional control means can then be used to prevent that the front face of the piston is moved into the second or opening position when melt is accidentally being moved by the screw past the piston's front face.

According to a further preferred embodiment, the processor is provided with at least two piston s operated alternately so that one piston's front face is in first or closed position when the other piston is in second or open position

The term "processor" as used herein is intended to refer to any type of apparatus having an elongated cavity that holds at least one rotor capable of causing motion of a material through the cavity from an inlet end to an exit end thereof To that effect, the rotor is provided in a portion, at least, of the length of the cavity with screw-type elements fitting into the cavity.

The rotor may include conveying or non-conveying helical portions upstream and/or downstream of the degassing device. However, at or near the degassing means, a conveying portion of the screw should be provided in a fitting arrangement, and the filling factor Φ should be less than unity to ascertain satisfactory operation.

The term "fitting" is intended to refer to such fit that the peripheral flight ends of the screw have a clearance of typically from about 0.001- 5 mm, preferably not more than about 1 mm.

The term "polymer composition" as used herein is intended to refer to a generally thermoplastic composition of the type commonly processed by means of barrel processors, typically of the extruder type having one or two screws for co-rotational or counter-rotational operation, or even more screws like, for a non limiting example, the planetary extruder or the ring extruder, which are well known in the extrusion art.

The term "piston " as used herein is intended to refer to a device of the piston-and-cylinder type for reciprocal back and forth motion of the piston element under the impact of a drive which may be pneumatic, mechanical, hydraulic, electric, or magnetic, between two end positions.

According to the invention, the piston has a closed front face shaped in conformity with the cavity wall so as to form a smooth, i.e. un-interrupted portion when in "closed" (i.e. non-venting) or "first" position. It is exposed to the action of the screw flights which - at least in the portion of the degassing means according to the invention - are "fitting" as explained above.

Obviously, the piston element of the piston must not be allowed to rotate around its own displacement axis because even a small rotation would result in an incomplete closure of the cavity. If the front face of the piston would not match smoothly with the wall of the cavity - i.e. not form an essentially continuous surface with the latter as is the aim of the piston according to the invention when in first or closed position - recesses or niches for accumulation of molten polymer composition would be formed. In the area of the front face, clearance between piston and cylinder preferable is below about 0.1 mm, e.g. in the range from 0.001 - 0.01 mm or even lower.

Depending on the screw speed, the screw flight should pass along the front face of the piston at least once within a cycle, i.e. between any two movements of the piston between first and second position. In practice, with typical screw speeds, e.g. in the order of 60 RPM = 1 RPS, and with realistic piston frequency values of 5 seconds per cycle, i.e. at a frequency of about 12 cycles per minute, at least five passages of a screw flight, per principle, over the front face of the piston will normally occur during each cycle. According to this example a two-principle screw will have at least 10 passages of a screw flight during 5 seconds.

Preferably, flight clearance in the scraping area is small, i.e. is in line with the definition of "fitting" as defined above.

The term "degassing outlet" (also sometimes referred to as "venting port") is intended to refer to a gas-passing connection between the cavity of the processor and an area of reduced pressure or vacuum, e.g. a pump, for receiving gas formed or contained within the cavity of the processor. The passage includes an outlet and is closed by the piston element when in its first position but is open when in its second position.

When the piston is in second position, a valve provided at an inlet to the gas-passing connection, typically the piston-receiving cylinder, an operated by a controlled drive is opened and a stream of gas, e.g. air at ambient pressure or under elevated pressure, or an inert gas, such as nitrogen, helium, carbon dioxide etc. is passed across the front face of the piston and into the outlet. Preferably, the valve is operated at a frequency that is lower than the frequency of the piston cycles. A valve cycle is the time that passes between a closed position of the valve through one open position and until return of the valve into closed position.

As will be apparent to those experienced in the art, the intensity of interaction between the gas that is passed across the front face of the piston and any polymer residue adhering to that front face - also termed "gas scouring" herein - can be determined by the pressure differential between the gas inlet and the reduced pressure or vacuum at the exit side of the piston-receiving space or cylinder as well as by the shape of the valve's outlet near the piston. Optimum conditions may depend upon the type of polymer composition that is being processed and other operating conditions, e.g. temperature and screw rotation speed but can be determined by a few simple tests for any given case.

Generally, the valve is operated at a frequency which is lower than the frequency at which the piston is operated. Preferably, the frequency of the piston is at least 2 - 20 times higher than the frequency of the valve operation and both the drive of the piston as well as the drive of the valve are controlled by electronic means in a manner known per se in the art.

The phrase "about" when used herein is intended to refer to a deviation of ± 50% of the value preceded by "about".

Thus, the present invention provides a system to remove any melt at the degassing site or port of the barrel. By using either a high-frequency or short-cycle operation of the piston or - preferably - by using at least two pistons s for alternating operation the venting function can be made continuous in effect.

Preferably, the axis of the path of piston operation intersects with the axis of the adjacent screw at an acute angle, preferably 90°, but intersection is not believed to be essential as a matter of principle but one of simplicity of structure.

Generally, the position of a degassing device according to the invention along the length of the screw is dependent upon many process parameters but can be selected in accordance with well known requirements for conventional degassing devices. With the preferred arrangement of two piston s for alternating operation and the resulting continuous degassing, the pistons of a pair are arranged opposite to each other.

Also, the low pressure or "vacuum" conditions for degassing can be selected in accordance with the operation of conventional devices; e.g. operating at an absolute pressure of 20 to 10 mbar or less. It is well known to those experienced in the art that the achievable "vacuum" depends on the gas volume fraction to be removed as well as on the available vacuum pump. Especially when "high vacuum" (i.e. a very low absolute pressure) is needed, the venting section of the extruder should be melt-sealed both upstream as well as downstream in the screw channel.

The piston may additionally be adapted for controlling various operating parameters, e.g. provided with heating means to avoid that the polymer-contacting front face of the piston is cooled excessively when in its second or open position. Such a heating system may also be advantageous for optimizing the clearance between the piston and the cylinder for reciprocating motion. In fact, by properly adjusting the temperature of the piston relative to the barrel temperature, thermal expansion of the piston element can be controlled as desired. Optimum conditions may be found for any given set of parameters by means of a few simple tests.

As briefly mentioned above, another advantageous auxiliary controlling for the invention is a pressure sensitive transducer applied to the rear part of the piston element of the piston to detect any melt pressure when the front face is in its first position. For example, the signal from the loading cell/s may be suitably analyzed and used to control that motion of the piston element that is blocked except when the melt pressure is zero.

Operation of gas removal and gas treatment can be effected in any conventional manner. To simplify reference, the first digit of any reference in the drawings refers to the number of the corresponding figure while the second and third digits are the same for the same or analogous portions of the illustration.

The invention will now be explained by way of illustration and not limitation with reference to the enclosed drawings in which:
Figure 1A is a diagrammatic cross-sectional view of a barrel processor according to the invention for degassing with a reciprocating piston and with a single screw, as viewed in a plane that is perpendicular relative to the longitudinal axis of the screw;
Figure 1B is another cross-sectional view of the barrel processor shown in Fig. 1A but viewed in a plane that extends through the longitudinal axis of the barrel processor;
Figure 2 is a cross-sectional view analogous to Fig. 1A, the view but illustrating a first alternative to provide two venting devices on a single-screw extruder according to the invention;
Figure 3 is a cross-sectional view analogous to Fig. 1B illustrating a second alternative to provide for two venting devices on a single-screw extruder according to the invention;
Figure 4 is a cross-sectional view analogous to the diagram shown in Fig. 1A but for a twin-screw extruder; and
Figure 5 is another cross-sectional view analogous to Fig. 4 but for a twin-screw extruder with two venting devices in juxtaposition.

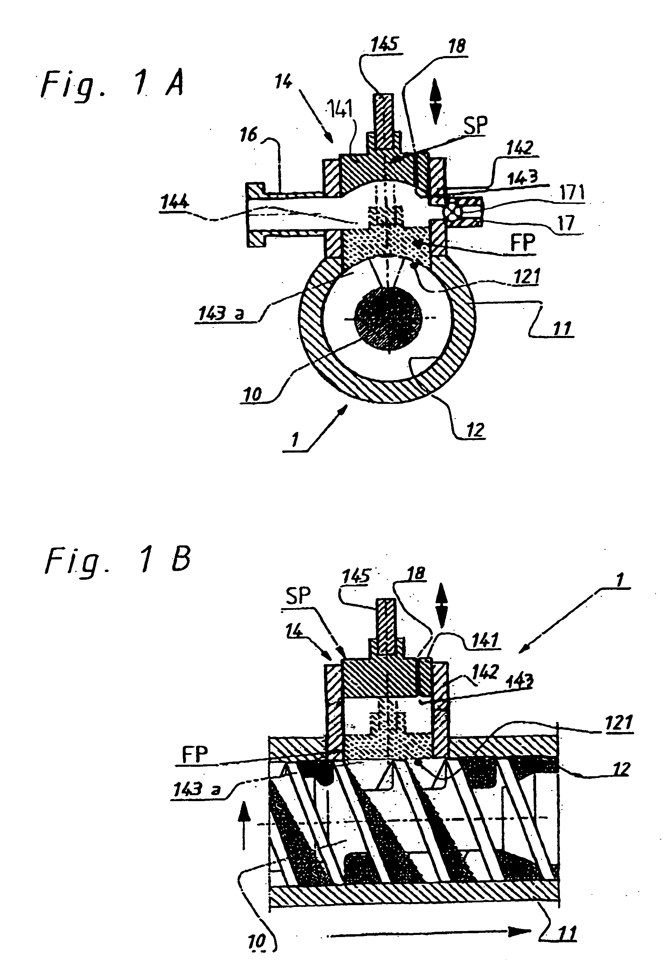

The processor or extruder 1 illustrated in Figs. 1A and 1B comprises a screw 10 fitting into the enclosure or barrel 11 which has an essentially smooth inner wall 12. Direction of rotation and material flow are indicated by lateral arrows. Only a portion of the extruder in the venting area is shown; feeding devices, drive means etc. are omitted in the drawings. Chamber 14 is formed by an outer cylindrical stationary member 142 and piston 141 is arranged for reciprocating movement therein. Piston 141 is connected to a rod 145 for connection with a drive (not shown) to cause motion of piston 141 (indicated by the double arrow) between its first or closed position FP (shown in broken lines) and its second, venting or open position SP. Piston 141 is operated at a frequency of typically between about 10 and 100 cycles per minute.

Outlet 16 is provided to form a venting passage 144 which is "open" - i.e. connects the interior of enclosure 11 with a source (not shown) of reduced pressure or with another means for receiving gases removed from the interior of enclosure 11 - when piston 141 is in open position SP.

In a diametrically opposite position relative to outlet 16 is an inlet or duct 17 provided with a valve 171 connected with a drive (not shown) for alternately closing the valve and admitting air or an inert gas held at ambient or elevated pressure of typically up to about 10 bar to stream across front face 143 of piston 141 through venting passage 144 and into and out of duct 16. Valve operation is controlled at a frequency below that of piston 141. The intensity of the gas scouring effect can be increased by increasing gas flow velocity across the piston's front face, e.g. by increasing the pressure of the gas fed through inlet 17 and valve 171.

As long as piston 141 is in its "closed" position FP, the front face 143a of piston 141 forms a smoothly continuous portion 121 of the inner surface 12 of processor 1. Control means (not shown) of any conventional type are provided to actuate and control motion of piston 141 from its closed position FP into venting or open position SP. A pressure sensitive device 18, e.g. a conventional and commercially available pressure transducer is provided, e.g. a conventional Gefran^{©} strain gauge PT type SP850 for high-temperature melt with a pressure indicating scale of from 0 to 50 or 100 bar. Sensors of this type are sufficiently fast (e.g. 4 - 8 ms) and reliably accurate. Such a device will prevent opening of the venting device when for some reasons melt within enclosure 12 exerts pressure onto front face 143. Typically, a signal will be generated then to indicate to the operator that an abnormal condition exists and that an appropriate action is required, e. g. rearranging the pressure drop conditions at the end of the screw, or taking other action as required to return to normal operation.

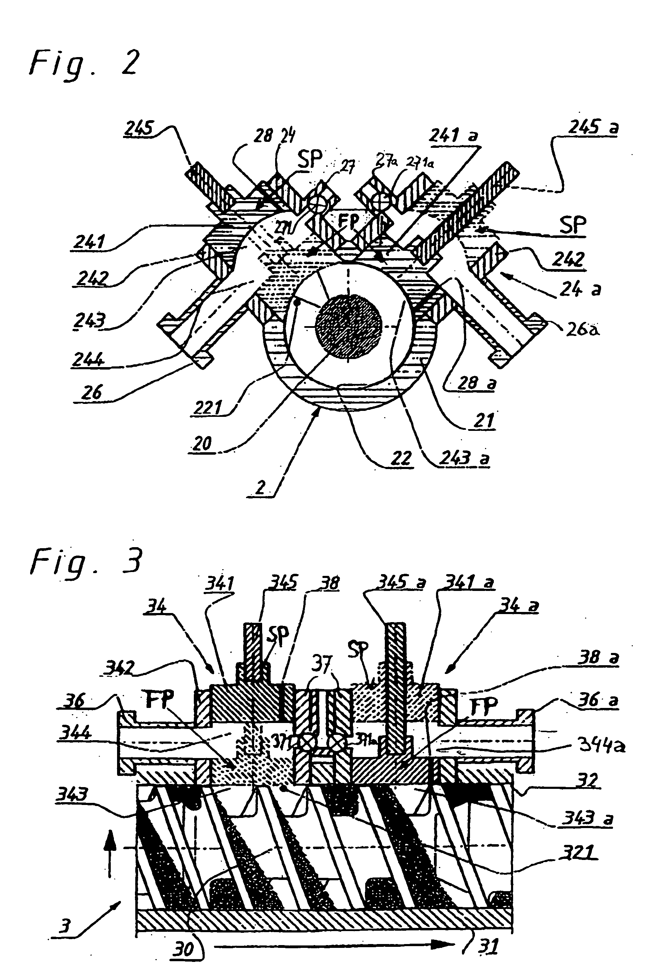

Figs. 2 and 3 are illustrations similar to the presentation of Figs. 1A and 1B. Fig. 2 illustrates an extruder 2 with a single screw 20 within an enclosure 21 as above, but with a pair of adjacently arranged piston-cylinder-type venting devices formed by cylinders 24, 24a and pistons 245, 245a structured as explained above but operated so that piston 245 is in open position SP when piston 245a is in closed position FP. This way of arranging two or more venting devices according to the invention is termed "radial displacement" relative to the longitudinal axis of the extruder. Again, analogous to the arrangement shown in Fig. 1, inlet ducts 27, 27a provided with valves 271, 271a are arranged diametrically opposite to exit ducts 26, 26a to permit gas scouring as explained above.

Fig. 3 illustrates a different way of providing extruder 3 with more than one piston-type venting device in that two piston-type venting devices 34, 34a are arranged in distanced relation along the axis of screw 30 in enclosure 31. Again, operation preferably is controlled such that one venting device 34 is in open position SP when the other venting device 34a is in closed position FP. This way of arranging two or more venting devices according to the invention is termed "axial displacement" relative to the longitudinal axis of the extruder. Gas scouring is effected by means of a gas stream passing through inlet 37 branching into adjacent venting passages 344, 344a via valves 371, 371a.

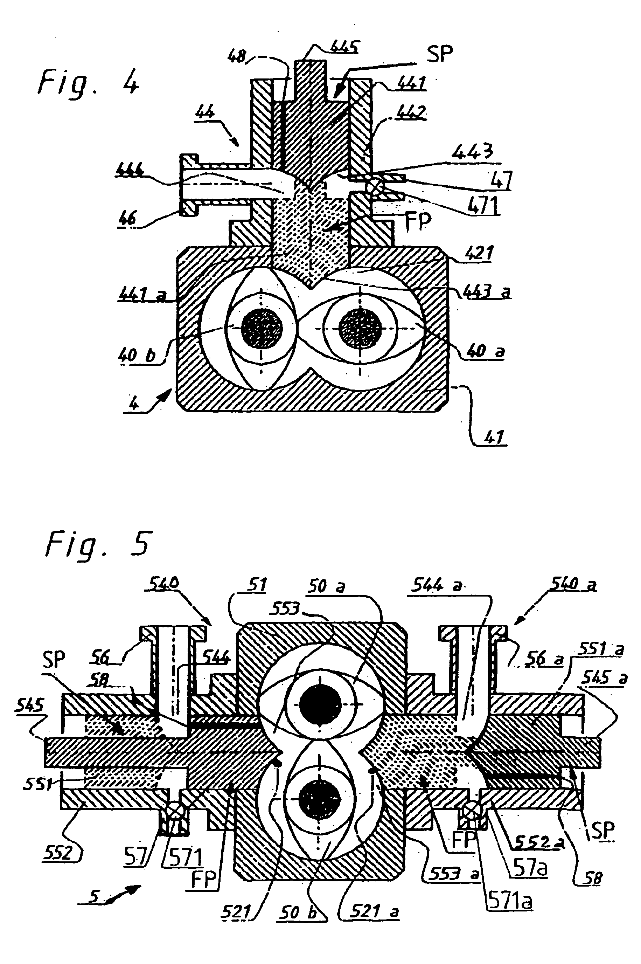

Fig. 4 illustrates an extruder 4 with two screws 40a, 40b for co-rotational or counter-rotational operation. A single piston-cylinder type venting device 44 is provided for venting inner space 421 whenever piston 441a is moved from its closed first position FP (indicated in broken lines) into open position SP of piston 441 . Front face 443a of piston 441a is shaped to exactly complement and close inner surface 421 of enclosure 41. Gas scouring is achieved by passing pressurized air or inert gas from a source (not shown) through inlet 47 via valve 471 (when the valve is in open position) across front face 443 of piston 441 (in position SP) through venting passage 444 and through outlet 46 to a source (not shown) of reduced pressure, e.g. a vacuum pump.

Fig. 5 illustrates an extruder 5 with two screws 50a, 50b, again for co-rotational or counter-rotational operation. Two piston-type venting devices 540, 540a are provided for venting inner space 531 whenever piston 551 or piston 551 a is moved from its closed position FP (indicated for piston 551a in broken lines) into its open position SP (indicated for piston 551 in broken lines). Front faces 521 and 521 a of pistons 551, 551 a are shaped to exactly complement and close the inner surface of enclosure 51 whenever the corresponding piston is in closed position FP.

Gas scouring is achieved by passing pressurized gas through inlet 57, 57a via valve 572, 571a when in open position into and through venting space 544, 544a to a source (not shown) of reduced pressure whenever the associated piston 551, 551a is in open or second position SP.

As will be apparent to persons experienced in the art of producing and operating extruders, embodiments of the invention set forth in the drawing are represented in a diagrammatic manner to show some preferred alternatives. Obviously, various modifications can be made, e.g. using more than two venting devices and/or combining radial and linear displacement of pairs of venting devices. Further, various operational alternatives can be used whenever pressure sensor 18, 28, 3 8, 48, 58 generates a signal that indicates a significant amount of molten material on the front face of the associated Piston.

## Claims

1. A processor (1) for a molten polymer composition, said processor comprising at least one screw (10) rotatably arranged within an enclosure (11) having an inner wall (12) fitting said at least one screw in a portion, at least, of said enclosure; said processor comprising a chamber (14) having an outlet (16) for connecting said enclosure (11) with a source of reduced pressure;
wherein means for degassing comprises at least one piston (141) for reciprocating movement within said chamber (14) between a first (FP) and a second (SP) position;
said piston having a front face (143) shaped in conformity with said inner wall of said enclosure in said fitting portion;
said front face of said piston forming part of said inner wall in said fitting portion of said enclosure when said piston is in said first position, and providing an opening (121) of said inner wall when in said second position;
said chamber (14) providing a passage (144) for connecting said opening of said wall with said outlet (16) when said piston (141) is in said second position (SP);
**characterized in that** said chamber (14) has an inlet (17) provided with a valve (171) for permitting an intermittent passage of a stream of gas across said front face (143) of said piston (141) and into said outlet to effect controlled gas scouring of said front face (143) when said piston (141) is in second position (SP) and of said outlet so as to remove any melt composition particles therefrom.

2. The processor (1) of claim 1 comprising a means (18) for measuring a pressure exerted by said molten polymer composition on said front face when said piston is in said first position (FP).

3. The processor (1) of claim 1 or 2, wherein said valve (171) is connected with an actuation control permitting periodic actuation of said valve.

4. The processor (1) of any of claims 1- 3, wherein said chamber (14) has an essentially cylindrical cross-section and wherein said outlet (16) is in an essentially juxtaposed peripheral position relative to said inlet (17).

5. A method of degassing a molten polymer composition using the processor of claim 1, contained in a barrel processor comprising at least one screw rotatably arranged within an enclosure having an inner wall fitting said at least one screw in a portion, at least, of said enclosure; said processor being connected with at least one piston for reciprocating movement within a piston-receiving space between a first and a second position therein;
said at least one piston having a front face shaped in conformity with said inner wall of said enclosure in said fitting portion thereof;
said front face of said piston forming part of said inner wall in said fitting portion of said enclosure when said piston is in said first position, and providing an opening of said inner wall when in said second position;
said piston-receiving space connecting said opening of said wall with a degassing outlet when in said second position; and
said piston-receiving space being connected with a source of reduced pressure and with a source of gas for gas-scouring said front face when in said second position;
said method comprising the step of :
alternately moving said piston between said first position and said second position at a first frequency for removing gas from said molten polymer composition through said degassing outlet when the filling factor Φ is less than 1, where 1 is a full screw channel;
rotating said at least one screw when said piston is in said first position for removing molten polymer composition from said front face of said piston; said method being **characterized by** intermittently passing a stream of gas at a second frequency across said surface of said piston when in said second position for removing any deposits of said molten polymer composition from said surface by alternately closing and opening access to said source of gas.

6. The method of claim 5, wherein a signal is generated when a pressure which signals a significant presence of molten material on said front face of said piston when in said first position FP is indicated.

7. The method of any of claims 5 or 6, wherein said first frequency is higher than said second frequency and preferably at least twice said second frequency.

8. The method of claim 6 claim, wherein said piston(s) is/are controlled to retain their first position FP whenever said signal indicates a significant presence of molten material on said front face of said piston.

9. The method of any of claims 6 to 8, wherein said stream of gas is a stream of ambient air or of an inert gas.

## Patentansprüche

1. Prozessor (1) für eine geschmolzene Polymerzubereitung, welcher Prozessor mindestens eine Schnecke (10) besitzt, die drehbar in einem Gehäuse (11) angeordnet ist, das eine Innenwand (12) besitzt, die in mindestens einem Teil des Gehäuses der mindestens einen Schnecke angepasst ist; wobei der Prozessor eine Kammer (14) besitzt, die einen Ausgang (16) zur Verbindung des Gehäuses (11) mit einer Quelle für verminderten Druck aufweist;
wobei Mittel zum Entgasen mindestens einen sich zwischen einer ersten(FP) und einer zweiten Position (SP) in der Kammer (14) hin- und her bewegenden Kolben (14) umfassen;
wobei der Kolben eine konform zur Innenwand des Gehäuses in der angepassten Position ausgebildet Stirnfläche (143) besitzt;
wobei die Stirnfläche des Kolbens Teil der Innenwand des Gehäuses in der angepassten Position bildet, wenn sich der Kolben in der ersten Position befindet, und in der zweiten Position eine Öffnung (121) der Innwand bietet;
wobei die Kammer (14) einen Durchgang (144) zur Verbindung der Öffnung der Wand mit dem Ausgang (16) bietet, wenn der Kolben (141) sich in der zweiten Position (SP) befindet;
**dadurch gekennzeichnet, dass** die Kammer (14) einen Einlass (17) aufweist, der mit einem Ventil (171) versehen ist, um einen intermittierenden Durchgang eines Gasstroms über die Stirnfläche (143) des Kolben (141) und in den Auslass zu gestatten und eine kontrollierte Gasreinigung der Stirnfläche (143) des Kolbens (141) und des Auslasses zu bewirken, wenn der Kolben (141) sich in der zweiten Position (SP) befindet, um allfällige Teilchen aus Schmelzzubereitung davon zu entfernen.

2. Prozessor (1) nach Anspruch 1, der ein Mittel (18) zur Messung eines Druckes umfasst, der von der geschmolzenen Polymerzubereitung auf die Stirnfläche ausgeübt wird, wenn sich der Kolben in der ersten Position (FP) befindet.

3. Prozessor (1) nach Anspruch 1 oder 2, bei dem das Ventil (171) mit einer Auslösesteuerung verbunden ist, die eine periodische Betätigung des Ventils gestattet.

4. Prozessor (1) nach einem der Ansprüche 1 - 3, wobei die Kammer (14) einen im wesentlichen zylindrischen Querschnitt besitzt und wobei der Auslass (16) dem Einlass (17) im wesentlichen peripher gegenüber liegt.

5. Verfahren zum Entgasen einer geschmolzenen Polymerzubereitung unter Verwendung des Prozessors gemäss Anspruch 1, welche Polymerzubereitung in einem zylindrischen Prozessor enthalten ist, der mindestens eine Schnecke besitzt, die drehbar in einem Gehäuse angeordnet ist, das eine Innenwand besitzt, die in mindestens einem Teil des Gehäuses der mindestens einen Schnecke angepasst ist; wobei der Prozessor mit mindestens einem Kolben zur Hin- und Her-Bewegung in einem den Kolben umfassenden Raum zwischen einer ersten und einer zweiten Position im Kolben verbunden ist;
wobei der mindestens eine Kolben eine konform zur Innenwand des Gehäuses in der angepassten Position ausgebildet Stirnfläche besitzt;
wobei die Stirnfläche des sich in der ersten Position befindlichen Kolbens Teil der Innenwand im angepassten Teil bildet und in der zweiten Position eine Öffnung der Innenwand bildet;
wobei der den Kolben umfassende Raum die Öffnung der Wand in der zweiten Position mit einem Entgasungsauslass verbindet;
wobei der den Kolben umfassende Raum in der zweiten Position mit einer Quelle für verminderten Druck und mit einer Gasquelle zur Gasreinigung der Stirnfläche verbunden ist;
welches Verfahren den Schritt der:
alternierenden Bewegung des Kolbens zwischen der ersten Position und der zweiten Position mit einer ersten Frequenz zur Entfernung von Gas aus der geschmolzenen Polymerzubereitung durch den Entgasungsauslass, wenn der Füllfaktor Φ kleiner als 1 ist, wobei 1 einen vollen Schneckenraum bedeutet;
Rotieren der mindestens einen Schnecke, wenn sich der Kolben in der ersten Position befindet, zur Entfernung von geschmolzener Polymerzubereitung von der Stirnfläche des Kolbens;
wobei das Verfahren **gekennzeichnet ist durch** intermittierendes Durchleiten eines Gasstromes bei einer zweiten Frequenz über die Oberfläche des Kolbens in der zweiten Position zur Entfernung aller Ablagerungen der geschmolzenen Polymerzubereitung von der Oberfläche **durch** alternierendes Schliessen und Öffnen des Zugangs zu der Gasquelle.

6. Verfahren nach Anspruch 5, wobei ein Signal erzeugt wird, wenn ein Druck, der eine signifikante Anwesenheit von geschmolzenem Material auf der Stirnfläche des Kolbens erzeugt wird, wenn die erste Position FP indiziert ist.

7. Verfahren nach einem der Ansprüche 5 oder 6, wobei die erste Frequenz höher als die zweite Frequenz ist und vorzugsweise mindestens zweimal höher ist als die zweite Frequenz.

8. Verfahren nach Anspruch 7, wobei der Kolben oder die Kolben in der ersten Position FP gehalten werden, wenn das Signal eine signifikante Anwesenheit von geschmolzenem Material auf der Stirnfläche des Kolbens anzeigt.

9. Verfahren nach einem der Ansprüche 6 bis 8, wobei der Gasstrom ein Strom aus Raumluft oder aus einem Inertgas ist.

## Revendications

1. Dispositif de traitement (1) pour une composition de polymère fondu, ledit dispositif de traitement comprenant au moins une vis (10), agencée de manière rotative dans une enceinte (11) comportant une paroi interne (12) permettant l'ajustement de ladite au moins une vis dans au moins une partie de ladite enceinte ; ledit dispositif de traitement comprenant une chambre (14) comportant une sortie (16) pour connecter ladite enceinte (11) à une source de pression réduite ;
un moyen de dégazage comprenant au moins un piston (141), destiné à effectuer un déplacement alternatif dans ladite chambre (14), entre une première (FP) et une deuxième (SP) position ;
ledit piston comportant une face avant (143) ayant une forme conforme à ladite paroi interne de ladite enceinte dans ladite partie d'ajustement ;
ladite face avant dudit piston faisant partie de ladite paroi interne dans ladite partie d'ajustement de ladite enceinte lorsque ledit piston se trouve dans ladite première position, et établissant une ouverture (121) de ladite paroi interne lorsqu'il se trouve dans ladite deuxième position ;
ladite chambre (14) établissant un passage (144) pour connecter ladite ouverture de ladite paroi à ladite sortie (16) lorsque ledit piston (141) se trouve dans ladite deuxième position (SP) ;
**caractérisé en ce que** ladite chambre (14) comporte une entrée (17), comportant une soupape (171) pour permettre un passage intermittent d'un courant de gaz à travers ladite face avant (143) dudit piston (141) et dans ladite sortie, pour entraîner un rinçage contrôlé du gaz de ladite face avant (143), lorsque ledit piston (141) se trouve dans la deuxième position (SP), et de ladite sortie, de sorte à éliminer de quelconques particules fondues de la composition.

2. Dispositif de traitement (1) selon la revendication 1, comprenant un moyen (18) pour mesurer une pression exercée par ladite composition de polymère fondu sur ladite face avant lorsque ledit piston se trouve dans ladite première position (FP).

3. Dispositif de traitement (1) selon les revendications 1 ou 2, dans lequel ladite soupape (171) est connectée à une commande d'actionnement, permettant un actionnement périodique de ladite soupape.

4. Dispositif de traitement (1) selon l'une quelconque des revendications 1 à 3, dans lequel ladite chambre (14) a une section transversale pratiquement cylindrique, ladite sortie (16) se trouvant dans une position périphérique pratiquement juxtaposée à ladite entrée (17).

5. Procédé de dégazage d'une composition de polymère fondu par l'intermédiaire du dispositif de traitement selon la revendication 1, contenu dans un dispositif de traitement au tonneau, comprenant au moins une vis agencée de manière rotative dans une enceinte comportant une paroi interne permettant l'ajustement de ladite au moins une vis dans au moins une partie de ladite enceinte ; ledit dispositif de traitement étant connecté à au moins un piston, destiné à effectuer un déplacement alternatif dans un espace de réception du piston, entre des première et deuxième positions ;
ledit au moins un piston comportant une face avant, ayant une forme conforme à ladite paroi interne de ladite enceinte dans ladite partie d'ajustement de celle-ci ;
ladite face avant dudit piston faisant partie de ladite paroi interne dans ladite partie d'ajustement de ladite enceinte lorsque ledit piston se trouve dans ladite première position, et établissant une ouverture de ladite paroi interne lorsqu'il se trouve dans ladite deuxième position ;
ledit espace de réception du piston connectant ladite ouverture de ladite paroi à une sortie de dégazage dans ladite deuxième position ; et
ledit espace de réception du piston étant connecté à une source de pression réduite et à une source de gaz pour assurer un rinçage du gaz de ladite face avant dans ladite deuxième position ;
ledit procédé comprenant les étapes ci-dessous :
déplacement alternatif dudit piston entre ladite première position et ladite deuxième position à une première fréquence, pour éliminer le gaz de ladite composition de polymère fondu à travers ladite sortie de dégazage lorsque le facteur de remplissage Φ est inférieur à 1, où 1 est un canal de vis plein ;
rotation de ladite au moins une vis lorsque ledit piston se trouve dans ladite première position, pour éliminer la composition de polymère fondu de ladite face avant dudit piston ; ledit procédé étant **caractérisé par** l'étape de passage intermittent d'un courant de gaz à une deuxième fréquence à travers ladite surface dudit piston agencé dans ladite deuxième position, pour éliminer de quelconques dépôts de ladite composition de polymère fondu de ladite surface, en fermant et en ouvrant par alternance l'accès à ladite source de gaz.

6. Procédé selon la revendication 5, dans lequel un signal est transmis lors de l'indication d'une pression signalant une présence notable de matériau fondu sur ladite face avant dudit piston agencé dans ladite première position (FP).

7. Procédé selon l'une quelconque des revendications 5 ou 6, dans lequel ladite première fréquence est supérieure à ladite deuxième fréquence et représente de préférence au moins le double de ladite deuxième fréquence.

8. Procédé selon la revendication 6, dans lequel ledit (lesdits) piston(s) est/sont contrôlé(s) de sorte à rester dans sa (leur) première position lorsque ledit signal indique une présence notable de matériau fondu sur ladite face avant dudit piston.

9. Procédé selon l'une quelconque des revendications 6 à 8, dans lequel ledit courant de gaz est un courant d'air ambiant ou d'un gaz inerte.
